# EUROPEAN PATENT APPLICATION

(11) **EP 1 964 674 A2**
(43) Date of publication of application: **03.09.2008**
(21) Application number: 07015274.9
(22) Date of filing: 03.08.2007
(51) Int. Cl.: B32B 38/18

(54) **Transporting conveyor for continuously laminating plural objects**

(30) Priority: 27.02.2007 CN 200720004951 U
(71) Applicant: Michilin Prosperity Co., Ltd., SanChung City, Taipei Hsien 241, Taiwan (TW)
(72) Inventor: Wang, Tie Chun, Taipei Hsien 241 (TW)
(74) Representative: Schaeberle, Steffen

(57) **Abstract**

A transporting conveyor for continuously laminating plural objects has a transporting belt (23) and several resilient tabs (24) disposed thereon in parallel. After objects to be laminated are disposed in lamination pouch films, they are held and positioned by the resilient tabs (24). The transporting belt (23) slowly moves and sends the objects to be laminated and held on the resilient tabs (24) into the laminator (7), reducing time required for laminating plural objects.

## Description

### BACKGROUND OF THE INVENTION

### Field of Invention

The invention relates to a laminator and, in particular, to a transporting conveyor therein for continuously laminating plural objects. The objects are individually sent by the transporting conveyor into the laminator, reducing the required time for laminating plural objects.

### Related Art

As is well known, a laminator is used to laminate important documents or objects such as photographs and identifications (ID). After being disposed inside lamination pouch films, they are heated by a high-temperature pressing roller, which is in turn heated by the radiation from a heating element of the laminator. The heat fuses the lamination pouch films together, thereby protecting the laminated products.

During the above-mentioned lamination process, two drawbacks of the conventional laminators are long pre-heating time and inhomogeneous temperature on the roller. The former makes the user impatient, and the latter results in bad lamination quality.

### SUMMARY OF THE INVENTION

An objective of the invention is to provide a transporting conveyor for continuously laminating plural objects. Objects to be laminated are first positioned on tabs thereof and then automatically fed into the laminator one by one, reducing time required for laminating plural objects.

Another objective of the invention is to provide a transporting conveyor such that once the lamination of plural objects pre-positioned on the tabs starts, the user can leave for taking care of other things without the need to monitor the lamination process.

To achieve the above objectives and prevent drawbacks in the prior art, the disclosed transporting conveyor for continuously laminating plural objects has a transporting belt and several resilient tabs disposed thereon in parallel. Objects to be laminated are disposed inside lamination pouch films, and are held and positioned by the resilient tabs. The transporting belt slowly moves and sends the objects held on the resilient tabs into the laminator one by one, reducing time required for laminating plural objects.

### BRIEF DESCRIPTION OF THE DRAWINGS

The invention will become more fully understood from the detailed description given herein below illustration only, and thus is not limitative of the present invention, and wherein:

FIG. 1 is a three-dimensional exploded view of the disclosed transporting conveyor; and

FIG. 2 schematically shows that objects being disposed inside lamination pouch films are positioned on tabs and sent by the transporting conveyor individually into the laminator.

### DETAILED DESCRIPTION OF THE INVENTION

The present invention will be apparent from the following detailed description, which proceeds with reference to the accompanying drawings, wherein the same references relate to the same elements.

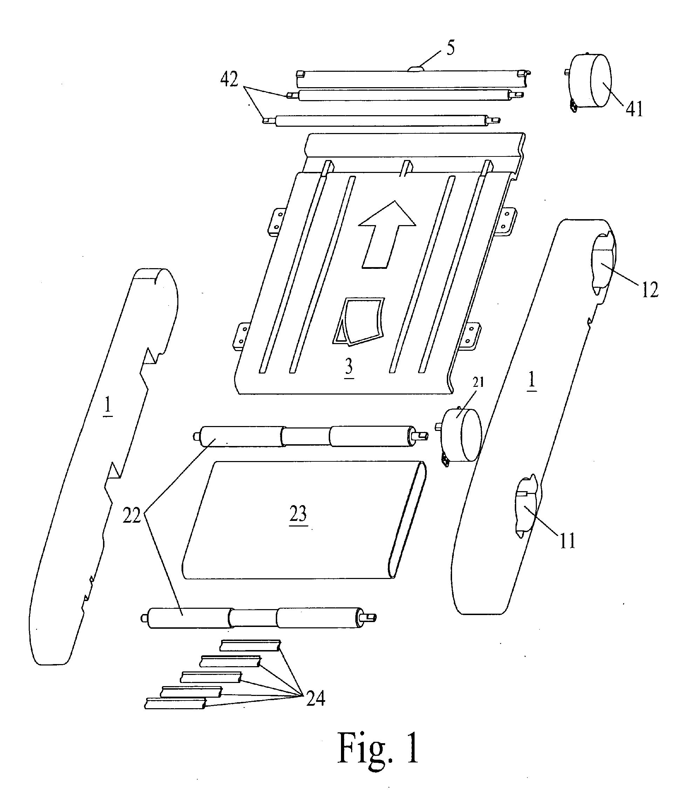

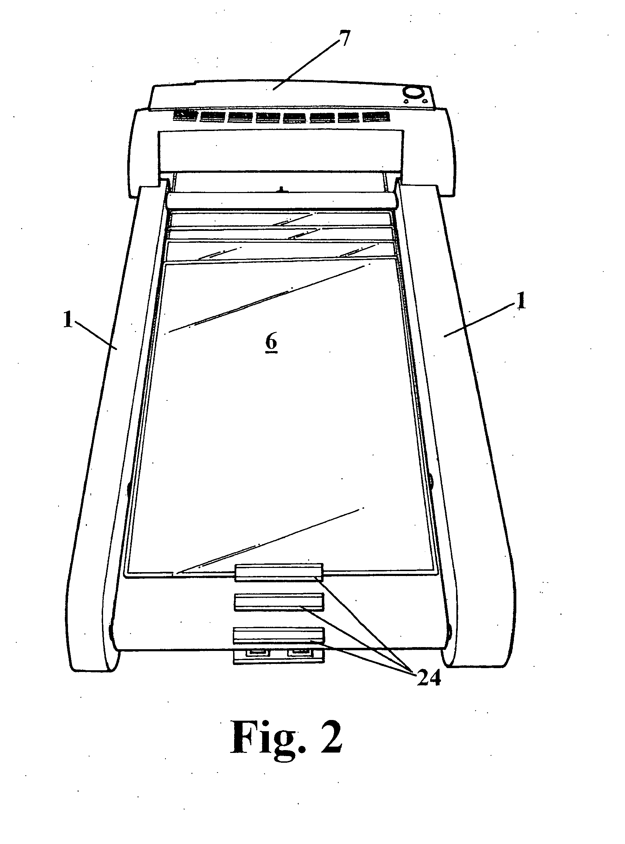

FIG. 1 is a three-dimensional exploded view of the invention. FIG. 2 schematically shows that objects being disposed inside lamination pouch films are positioned on tabs and sent by the transporting conveyor individually into the laminator. The power source may be actively an independent power line (not shown) or passively a plug (not shown) plugged into the corresponding connecting port (not shown) of the laminator 7. Such an electrical connection provides the power required by the transporting conveyor. The transporting conveyor includes a base 1, a transporting device, a film guiding board 3, a feeding device, and a sensor.

The base 1 is used to support and installed with all elements of the transporting conveyor. The transporting device includes a motor 21 disposed inside a predetermined hole 11 on the base 1, a rotating axle set 22 driven by the motor 21, and a transporting belt 23 driven by the rotating axle set 22. The transporting belt 23 is disposed in parallel many resilient tabs 24 for holding lamination pouch films. The film guiding board 3 is disposed in the forward direction of the transporting device for conveying many films. The feeding device is disposed at the front end of the film guiding board 3. It includes a motor 41 disposed inside a predetermined hole 12 on the base 1 and a roller set 42 driven by the motor 41. The films on the film guiding board 3 are sent by the roller set 42 into the laminator 7 for lamination. The sensor is disposed at the front end of the feeding device. A CCD 5 is used to detect whether any lamination pouch film passes through and, if yes, provides a signal to stop the transporting motor 21. Once the film completely passes the CCD, another signal is generated and sent to activate the transporting motor 21 again. This mechanism ensures that only one lamination pouch film is sent into the laminator for lamination at a time.

In practice, the lamination pouch films 6 of plural objects are held in sequence on the resilient tabs 24 of the transporting device. A button is depressed to simultaneously start the operations of the transporting motor 21 and the feeding motor 41. The transporting motor 21 slowly moves the films 6 ahead. When a piece of lamination pouch film is brought by the feeding roller set 42 to the entrance of the laminator 7, the CCD 5 detects it. At this moment, the transporting motor 21 stops running until the lamination pouch film completely passes the CCD 5. Afterwards, the transporting motor 21 moves the next lamination pouch film ahead for lamination. Therefore, the objects can be laminated one by one. This significantly reduces the operation time required for manually laminating the objects because the user has to monitor the entire process.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A transporting conveyor for continuously laminating a plurality of objects, comprising:
a base, which supports all components of the transporting conveyor; and
a transporting device, which sends objects to be laminated one by one into the laminator for lamination.

2. The transporting conveyor for continuously laminating a plurality of objects of claim 1, wherein the transporting device includes a motor disposed in a predetermined hole on the base, an rotating axle set driven by the motor, and a transporting belt driven by the rotating axle set.

3. The transporting conveyor for continuously laminating a plurality of objects of claim 2, wherein the transporting belt is disposed with a plurality of resilient tabs in parallel for holding the lamination pouch films.

4. The transporting conveyor for continuously laminating a plurality of objects of claim 1, wherein a film guiding board is disposed in the forward direction of the transporting device on the base for conveying a plurality of lamination pouch films.

5. The transporting conveyor for continuously laminating a plurality of objects of claim 4 with a feeding device being disposed at the front end of the film guiding board, wherein the feeding device includes a motor disposed at a predetermined hole on the base and a roller set driven by the motor for sending the lamination pouch film thereon into the laminator.

6. The transporting conveyor for continuously laminating a plurality of objects of claim 5 with at least a sensor being disposed at the front end of the feeding device, wherein the sensor arranged to detect whether a lamination pouch film passes through and, if yes, provides a signal to stop the operation of the transporting motor, and, after the lamination pouch film passes, provides another signal to start the operation of the transporting motor again, ensuring that only one film is fed into the laminator for lamination at a time.
